Europäisches Patentamt

European Patent Office

Office européen des brevets

(11) Publication number: **0 125 794**
**A2**

(12) **EUROPEAN PATENT APPLICATION**

(21) Application number: **84302506.5**

(22) Date of filing: **12.04.84**

(51) Int. Cl.³: **B 01 D 35/20**
**B 01 D 35/28**

(30) Priority: **13.04.83 AU 8852/83**

(43) Date of publication of application:
**21.11.84 Bulletin 84/47**

(84) Designated Contracting States:
**AT BE CH DE FR GB IT LI LU NL SE**

(71) Applicant: **MINPRO PTY. LIMITED**
**1 National Street**
**Rozelle New South Wales 2039(AU)**

(72) Inventor: **Lee, Jeremy James**
**124 Louisa road**
**Birchgrove New South Wales, 2041(AU)**

(72) Inventor: **Wright, Andrew John Lindsay**
**96 Garden Street**
**Alexandria New South Wales, 2015(AU)**

(72) Inventor: **Prior, Murray Howard**
**58 Lord Street**
**Roseville New South Wales, 2069(AU)**

(74) Representative: **Roos, Michael John et al,**
**KILBURN & STRODE 30 John Street**
**London WC1N 2DD(GB)**

(54) Double rapped sieve screen deck.

(57) A sieve screen deck for separating liquids from fine solids or for separating solid particles of different sizes, comprising a sieve screen supported on a frame and means to cause the screen to vibrate or flex. The invention is characterised in that the means to cause the sieve screen to vibrate or flex comprises first and second rapping or vibrating means the vibrational or flexing motion induced in the sieve screen by the second means being substantially greater in amplitude and lower in frequency than the vibrational or flexing motion induced by the first means.

EP 0 125 794 A2

./...

FIG. 1

The present invention relates to a sieve screen deck and more particularly to such a sieve screen deck having a self supporting sieve screen with double rapping means, such that the sieve screen may be simultaneously vibrated or flexed at two different impact rates.

Screen decks are used to separate liquids from a wide range of solid particulate matter and to separate fines from flowable streams of particulate matter. A slurry or a mixture of particles is flowed onto the upper end of the screen deck. As the mixture flows down a sieve screen in the deck the liquid or fines fall through the apertures in the sieve screen. In conventional screen decks the sieve screen is rigidly connected to a frame around its full periphery. In a planar screen this is usually done by clamping the sieve screen around its edges to the frame while in the case of a curved sieve screen, i.e. a sieve bend, the curved edges are supported and stiffly held in place by radius bows which are generally wedged in place or firmly located by springs.

It has been found in certain situations that the sieving action of such a curved screen deck may be enhanced by vibrating the screen or by rapping the screen i.e. by applying repeated impacts to one face of the screen or to the screen frame. Rapping is normally done by connecting a rapping bar to the underside of the sieve screen and positioning on the frame, or on the ground beneath the frame, a mechanical impacting means which imparts blows in rapid succession to the rapping bar or by vibrating the complete screen and holding frame. The application of the rapping or vibrating force to a curved sieve screen which is rigidly held around its sides to a frame results in only a small part of the sieve screen actually moving.

It has been known to vibrate sieve screens formed of a fabric which is not self supporting. The fabric is held in a state of tension by being rigidly connected to a surrounding frame at its ends but not its sides. In this arrangement the application of a vibrational force to sieve screens of this type has not prevented blinding of the screen with fine particulate matter. It is believed this deficiency arises due to the nature of the apertures in the woven fabric sieve and due to the poor transmission of the vibrational forces throughout the screen due to its inherently non-rigid, i.e. non-self supporting, nature.

It has also been known to vibrate self supporting sieve screens of the type formed of a parallel array of wedge wires lying at right angles to the slope of the screen, whereby a substantial reduction in the degree of blinding , i.e., blockage of the apertures in the screen, has been achieved. It is believed that this improvement is due to the individual wedge wires moving slightly relative to one another due to flexing of the screen. This slight relative movement causes a self clearing action whereby near size particles, caught in the screen, are released to pass through as the wedge wires move apart. However, it has been found that over a period of time blinding will still occur with this arrangement, but that these particles blinding the screen may be dislodged by intermittently and sharply rapping the sieve screen.

The present invention consists in a sieve screen deck comprising a sieve screen, means to support the sieve screen and means to cause the sieve screen to vibrate or flex, characterised in that the means to cause the sieve screen to vibrate or flex comprises first and second rapping or vibrating means, the vibrational and/or flexing motion induced in the sieve screen by the second rapping or vibrating means being substantially greater in amplitude and lower in frequency than the vibrational and/or flexing motion induced by the first rapping or vibrating means.

The present invention further consists in a sieve screen deck, comprising a self supporting sieve screen having two opposed end edges; first and second rapping or vibrating means to cause the sieve screen to vibrate or flex; and a frame to which the sieve screen is connected, the sieve screen including sieving means defining a plurality of substantially parallel narrow slots and an array of backing bars connected to the sieving means which render the sieve screen self supporting, the sieve screen being connected to the frame only at or adjacent its two end edges and at least one of the connections being through a resilient bush or like means allowing limited vibrational movement between the sieve screen and the frame, means being provided to prevent material which is passing across the sieve screen between the two end edges from flowing over an edge of the sieve screen intermediate the said end edges which means do not impede substantially the ability of the sieve screen to vibrate and flex under the influence of the rapping or vibrating means, and said rapping or vibrating means inducing a vibratory motion in the sieve screen at a point or points intermediate its ends and the motion induced in the screen by said second rapping or vibrating means being substantially greater in amplitude and lower in frequency than the motion induced by said first rapping or vibrating means.

The motion caused in the screen by the first rapping means is preferably oscillatory while the motion caused by the second rapping means is preferably comprised of sharp impulses at regular intervals. The rapping or vibrating means may either apply a vibrational force to the screen which causes the screen to move but in which there is no loss of contact between the component applying the force to the screen and that part of the screen receiving the applied force, or it may apply a rapping force in which the component applying the force is drawn out of contact with the part receiving the force and is then moved back into contact therewith. The first and second rapping or vibrating means may be distinct and separate physical integers or may comprise parts of a single integer which parts individually contribute the desired motion to the screen.

In one embodiment of the invention the first and second rapping or vibrating means may comprise vibratory means mounted directly onto a rapping bar and preferably is pivotally connected thereto. This arrangement allows greater control to be effected over the vibrations of the sieve screen which can substantially alter the sieving action of the sieve screen deck. The rapping or vibrating means preferably comprises a double acting pneumatic ram having a lug at one end which may be bolted to a corresponding double clevis on the rapping bar. The angle of impact of the piston within the pneumatic ram may be varied by loosening the bolt connecting the ram to the rapping bar and rotating the pneumatic ram about the axis of the bolt. If desired the magnitude of the rapping force may be varied by adding weights to the free end of the piston rod projecting from the pneumatic ram. In an alternative embodiment of the invention the pneumatic ram could be replaced by an electric motor carrying eccentric weights or by a solenoid rapper.

In other embodiments of the invention vibration of the sieve screen, produced by one or both of the rapping or vibrating means, is brought about by the oscillation of a vibration bar connected to the underside of the sieve screen across its free width intermediate its ends. The vibration bar is pivotally connected to one end of each one of an array of fingers which are rigidly connected at their other end to, and extend radially from, a rod which is caused to oscillating about its longitudinal axis by the action of a motor rotating an eccentric or cam which actuates a further arm extending radially from the rod.

In a further embodiment of the invention the first and/or second rapping or vibration means comprises an arm pivotally mounted at one end and arranged such that its other end is caused to bear, continuously or intermittently, against a rapping bar on the underside of the sieve screen by a cam. Rotation of the cam causes the arm to bear more or less strongly against the rapping bar thus causing the sieve screen to vibrate or flex. In a particularly preferred embodiment a single cam and arm arrangement is used to act as both the first and second rapping or vibrating means. In this embodiment of the invention the cam surface includes a relatively large number of shallow undulations to cause rapid but low amplitude vibrations of the screen, and a relatively small number of deep undulations to cause less frequent vibrations of the screen of greater amplitude.

Typically, the rapping rates used in embodiments of the present invention would be in the range of 50-600 vibrations per minute for the first rapping means, and between one impact every half second and one impact every ten minutes for the second rapping means.

Means are preferably provided to prevent material flowing over the side edges of the sieve screen. These means are so arranged that they will not substantially impede the ability of the sieve screen to vibrate and flex. The means may comprise sealing means disposed between the side edges of the sieve screen and the frame or side wall connected to the side edges of the sieve screen.

In the case where sealing means are provided between the side edges of the sieve screen and the frame it is desirable that the frame includes a planar plate lying adjacent each side edge of the sieve screen. A resilient rubber or synthetic plastics material strip is preferably provided on the side edges of the sieve screen which can bear against the faces of the plates of the frame proximal to the side edges of the sieve screen.

Side walls to prevent material falling over the side edges of the sieve screen may be formed of a suitable synthetic plastics material or the like and connected to the side edges of the sieve screen. The plastics material should have sufficient resilience that the vibration of the sieve screen and its ability to flex are not substantially

impeded. In a preferred embodiment of the invention the side walls are cast in-situ on the side edges of the sieve screen. In other embodiments they may be clipped on, screwed on or attached in any other suitable manner. It has been found suitable to form the side walls of a polyurethane material which may be cast in-situ or formed separately and attached.

It is believed that the provision of flexible cast in-situ side walls on the self supporting but flexible sieve screen prevents material flowing over the edges of the screen without imparing the ability of the screen to vibrate and flex. It is believed that the freedom of the sieve screen to not only vibrate relative to its supporting frame but to also flex makes an important contribution to the efficiency of the seive screen.

The sieve screen is preferably formed of a parallel array of wedge wires lying at right angles to the slope of the screen. The wedge wires are preferably connected to an array of backing bars running longitudinally of the screen parallel to its fall line. A rapping bar is preferably connected to the backing bars parallel to the wedge wires. The screen may be planar or may curve along its length to form a sieve bend.

In an alternative embodiment the sieve screen comprises a sheet of metal into which an array of slots has been etched or otherwise formed. In this embodiment the sheet may be inherently self supporting or it may be supported by backing bars as described above.

The sieve screen is preferably formed with slots having a width of from 10 microns to 4mm, most preferably the slots have a width of from 100 microns to 1mm.

The frame of the sieve screen deck is of conventional construction subject to the fact that the screen is only connected along its end edges to the frame. The frame may be welded up from steel or formed in any other suitable manner.

In one embodiment of the invention the frame may completely surround the sieve screen however in other embodiments a plurality of sieve screens may be disposed in side by side array with a single frame supporting all of them in which case each sieve screen is not individually surrounded by a frame.

The sieve screen is connected at or adjacent its end edges to the frame. One or both of the ends of the sieve screen are connected to the frame through resilient bushes or like means which allow a limited amount of vibrational movement between the sieve screen and the frame. In a typical situation the bushes might allow a maximum movement of the sieve screen relative to the frames of 2 or 3mm, as compared with a maximum amplitude of vibration of the sieve screen of 5mm. If desired one end of the sieve screen may be rigidly connected to the frame. If the sieve screen is curved it may be desirable to provide adjustable connection means on the frame to attach the sieve screen to the frame. This is due to the fact that the exact curvature varies slightly between screens of the same nominal dimensions.

Hereinafter given by way of example only is a preferred embodiment of the present invention described with reference to the accompanying drawing in which:-

Fig. 1 is a side elevational view of a sieve screen deck according to this invention; and

Fig. 2 is a rear elevational view of the sieve screen deck of Fig. 1;

Fig. 3 is a side elevational view of a sieve screen deck according to another embodiment of the present invention;

Fig. 4 is a rear elevational view of the sieve screen deck of Fig. 3;

Fig. 5 is a side elevational view of a sieve screen deck according to a still further embodiment of the present invention;

Fig. 6 is a rear elevational view of the sieve screen deck of Fig. 5;

Fig. 7 is an elevational view of a cam for use in the sieve screen deck of Figs. 5 and 6 seen in a direction along its axis of rotation; and

Fig. 8 is an elevational view of the cam of Fig. 7 seen in a direction at right angles to its axis of rotation.

In the following description similar integers in the different embodiments of the invention described are given the same identifying number.

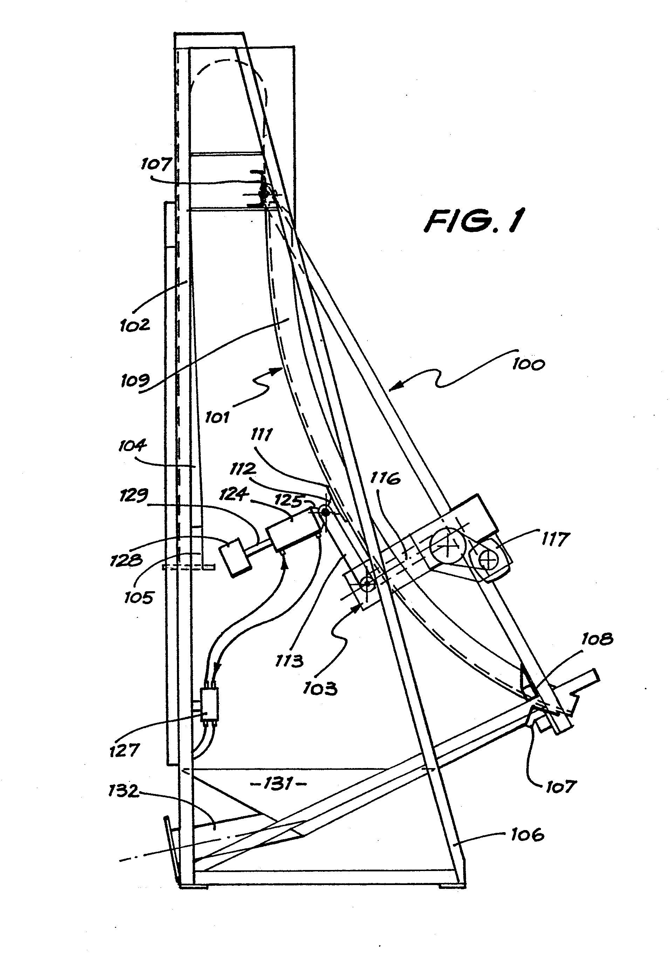

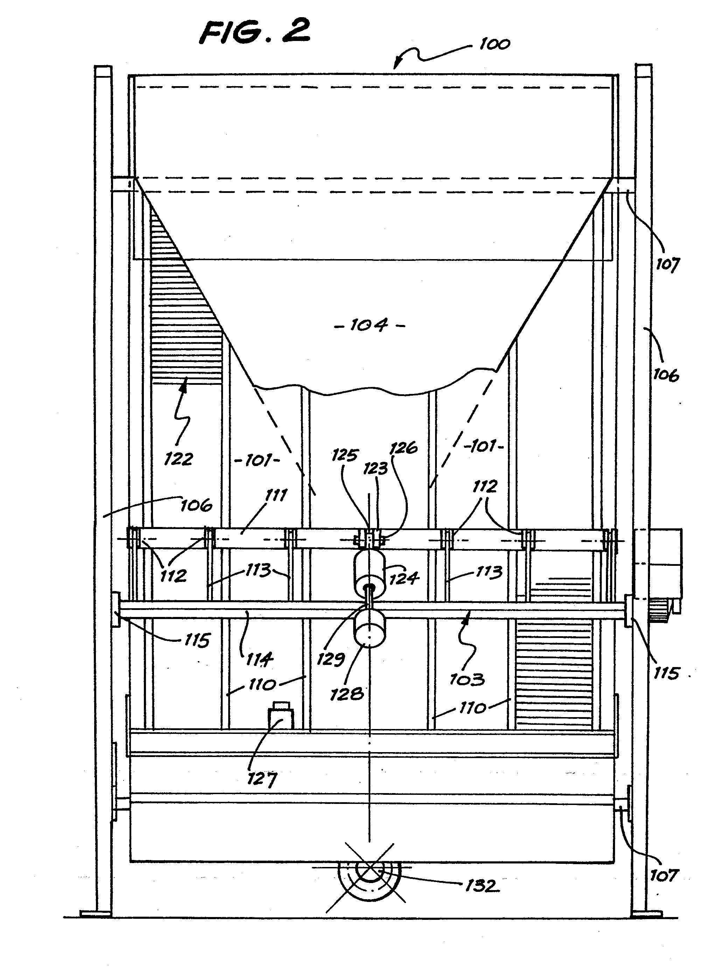

As seen in Figs. 1 and 2 the sieve screen deck 100 comprises a curved sieve screen 101 mounted in a frame 102 and a vibrating means 103.

The frame 102 includes a distribution box 104 on its rear side, which serves to distribute an incoming slurry entering the sieve screen deck 100 through inlet 105 evenly across the width of the sieve screen 101, a pair of side frame members 106 and transverse frame members 107. The sieve screen 101 is formed of a large number of horizontal wedge bars 122 connected to an array of backing bars 110. The screen 101 is bolted at its upper end to an upper transverse frame member 107 while at its lower end the screen is connected to a lower transverse frame member 107 through rubber bushes 108.

The sieve screen 101 is formed on either side with a flexible side wall 109 which is cast in-situ on the sieve screen 101 from a flexible polyurethane resin. These side walls serve to prevent material being passed across the sieve screen 101 from flowing off the sides thereof intermediate its ends.

The vibrating means 103 comprises vibration bar 111 connected to the backing bars 110 across the full width of the sieve screen 101 parallel to the wedge wires 122. A plurality of U-shaped saddles 112 are connected to the rear surface of the vibration bar 111. Each saddle 112 is pivotally connected to the face end of one of a plurality of fingers 113 which are welded to extend radially from a rod 114. The rod 114 extends transversely across the sieve screen deck 100 and is supported at either end by a bearing 115 such that it may rotationally oscillate about its longitudinal axis. A further arm 116 extends radially from rod 114 and at its free end has a bush which surrounds an eccentric cam (not shown) driven by motor 117 which is mounted on frame 102.

A double clevis 123 is provided mid-way along the length of the vibration bar 111. The rapping cylinder 124 is formed with a lug 125 which fits within the clevis 123 and is maintained in position by a bolt 126. The rapping cylinder 124 includes a piston (not shown) which may be moved back and forth within the cylinder by pneumatic means 127. A weight 128 may be affixed to the free end of the piston rod 129 of the rapping cylinder 124. In another embodiment of the invention the rapping cylinder 24 may be replaced by an electric solenoid for use in situations where it is not convenient to supply an air supply to drive a pneumatic cylinder.

In use a slurry or like feedstock is fed into the distribution bar 104 through inlet 105 and flows evenly onto sieve screen 101. As the slurry flows down the sieve screen 101 the sceeen 101 is caused to vibrate due to the motor driven eccentric causing the rod 114 to rotationally oscillate which in turn causes the vibration bar 111 to vibrate. At the same time the piston of the rapping cylinder 124 is caused to reciprocate at a repetition rate substantially slower than the rotational rate of the motor 117 causing a sharp and intermittent vibrating motion of the screen 101. Oversize particles flow down the screen 101 and off the bottom end into an oversize container (not shown) while the liquid and undersize particles flow through the screen 101 into the undersize container 131 which is drained via an outlet pipe 132.

It has been found that the vibrations applied to the sieve screen 101 are transmitted throughout the screen due to the manner in which it is mounted and due to its semi-rigid, self supporting nature. The sieve screen deck 100 has been found to be substantially less susceptible to blinding than any of the conventional sieve screen decks described in the preamble to this specification.

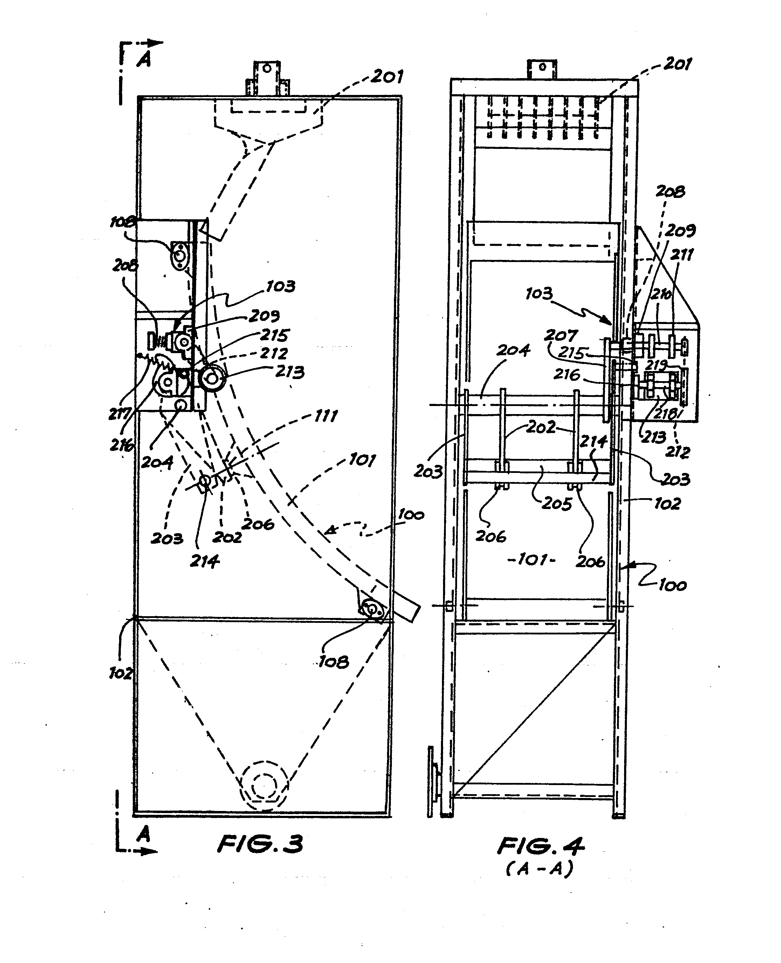

As is seen in Figs. 3 and 4 the sieve screen deck is in its essentials similar to the sieve screen deck described with reference to Figs. 1 and 2. The sieve screen deck 100 includes a curved screen 101 mounted in a frame 102 and a vibrating means 103. The frame 102 includes a distributor 201 on its upper end which distributor converts an incoming cylindrical slurry flow into a substantially planar flow which flows onto the upper end of the sieve screen 101. The distributor 201 is as described in Australian patent specification No. 80859/82.

The sieve screen 101 and frame 102 of the embodiment of the invention as shown in Figs. 3 and 4 are identical with those described with reference to Figs. 1 and 2, with the exception that at each of its ends the sieve screen 101 is connected to the frame 102 through rubber bushes 108.

The vibrating means 103 comprises a first pair of vibrating arms 202 which apply a vibrating motion to the vibration or rapping bar 111, and a second pair of arms 203 which impart a less frequent but more intense rapping blow to the bar 111. The arms 202 are connected at their free ends to a transverse bar 205 which carries two pairs of high density polyethylene pads 206 which actually bear against the bar 111. At their other end the arms 202 are connected to a bar 204 which extends at right angles to the arms 202 and is pivotally connected at each end to the frame 102. An arm 207 is also connected to bar 204 and extends radially therefrom and away from arms 202. At its free end the arm 207 is biassed by a spring 208 against a block 209 mounted on an eccentric (not shown). The eccentric is mounted on a shaft 210 mounted in bearings 211 and driven through a belt drive 212 from an electric motor 213.

The second pair of arms 203 are pivotably mounted coaxially with bar 204 and are joined by a bar 214 which is adapted to apply a rapping force to bar 205 which will in turn be applied to bar 111 on the sieve screen. One of the arms 203 is extended beyond its point of pivotal connection to the frame 102 and carries at its free end a cam follower 215. The cam follower 215 is forced against a cam 216 by a spring 217. The cam 216 is mounted on a shaft 218 and is driven by a belt drive (not shown) from the shaft 210 to a large diameter pulley 219 on shaft 218.

In operation the electric motor 213 is actuated which causes shaft 210 and its associated eccentric to rotate. The block 209 is thus caused to vibrate which in turn causes vibration of the sieve screen 101 through arms 207 and 202. The rotation of shaft 210 causes rotation of shaft 218 though at a slower rate. The cam 216 is rotated by shaft 218 and causes the cam follower to oscillate. The shape of cam 216 is such that cam follower is forced gradually away from the axis of cam 216 and then allowed to fall back rapidly under the influence of spring 217. The arms 203 and bar 214 are thus caused to move gradually away from bar 111 and to then spring back sharply towards the bar and to thus deliver a sharp blow thereto.

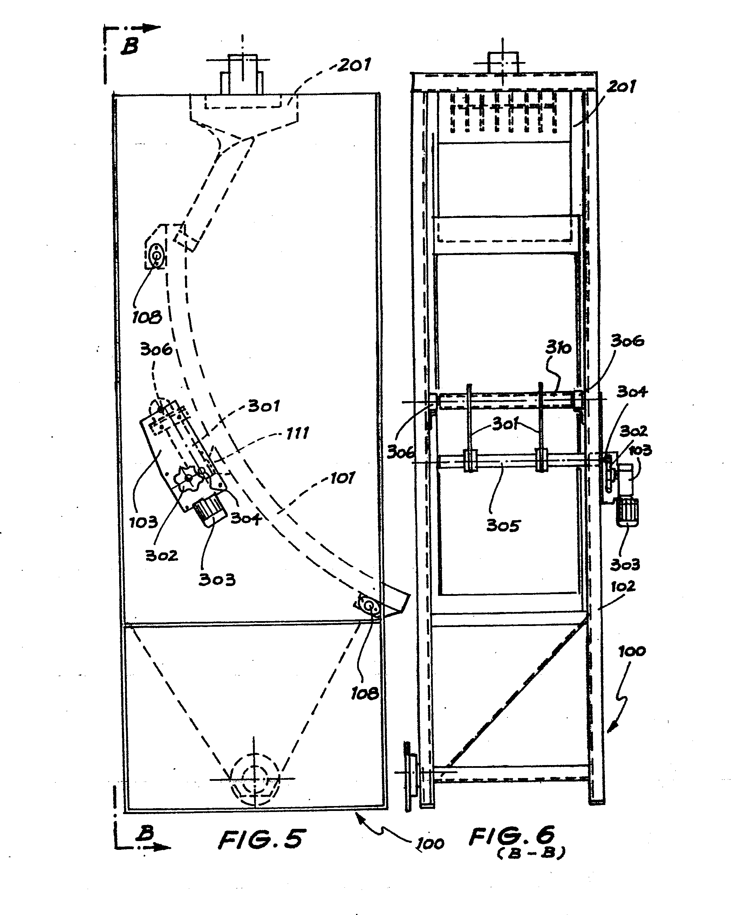

As seen in Figs. 5, 6, 7 and 8 the third embodiment of the present invention is identical in all respects with the embodiment described with reference to Figs. 3 and 4 with the exception of the vibrating means 103. In this case a single pair of rapping arms 301 are caused to move by a cam 302 so shaped that both types of motion are imparted to the screen 101 through the one cam 302 and one pair of arms 301.

The cam 302 is driven by an electric motor 303. The cam 302 bears against a cam follower 304 coaxial with a bar 305 joining the free ends of arms 301. The bar 305 is adapted to bear against the rapping or vibrating bar 111 on the sieve screen 101. The arms 301 are connected together at their other end by a bar 306 which is mounted on frame 102 by a pair of torsion mounts 306 which bias the arms, and thus bar 305 and cam follower 304, towards the cam 302.

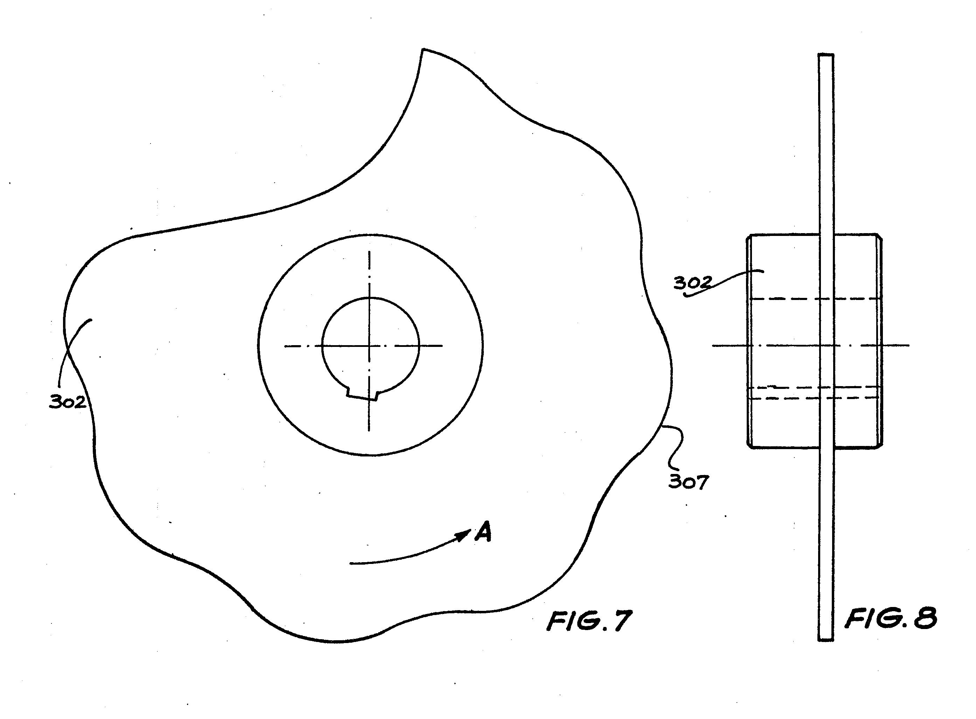

The cam 302 which is rotated in the direction of arrow A as seen in Fig. 7 has an outer periphery which includes a section 307 which includes a plurality of shallow undulations and a section 308 which includes a single deep recess which rises sharply to join the section 307 at its downstream end.

In operation, the cam section 307 applies a series of rapid vibrations of low amplitude to the cam follower 304 followed by a single rap of much greater amplitude.

It has been found that each of the foregoing sieve screens shows improved resistance to blinding than is shown by an equivalent screen rapped or vibrated by a conventional rapping means.

We claim

1.    A sieve screen deck comprising a sieve screen, means to support the sieve screen and means to cause the sieve screen to vibrate or flex, characterised in that the means to cause the sieve screen to vibrate or flex comprises first and second rapping or vibrating means, the vibrational and/or flexing motion induced in the sieve screen by the second rapping or vibrating means being substantially greater in amplitude and lower in frequency than the vibrational and/or flexing motion induced by the first rapping or vibrating means.

2.    A sieve screen deck as claimed in claim 1 in which the first and/or second rapping or vibrating means is selected from the group comprising a pneumatic double acting ram, an electric motor carrying eccentric weights and a solenoid rapper.

3.    A sieve screen deck as claimed in claim 1 in which the first and/or second rapping or vibrating means comprises an arm pivotally mounted on the frame and actuated by a cam or eccentric.

4.    A sieve screen deck as claimed in claim 3 in which the first and second rapping or vibrating means are together constituted by an arm pivotally mounted on the frame and actuated by a cam having a section of its operative surface so designed to impart relatively frequent oscillations of relatively low amplitude to the arm and a section so designed to impart less frequent oscillations of greater amplitude to the arm.

5.    A sieve screen deck as claimed in any one of claims 1 to 4 in which the first rapping or vibrating means is designed to apply vibrations or raps to the sieve screen at the rate of from 50 to 600 per minute and in which the second rapping or vibrating means is designed to apply vibrations or raps to the sieve screen at the rate of from one every half second to one every ten minutes.

6.    A sieve screen deck, comprising a self supporting sieve
screen having two opposed end edges; first and second rapping
or vibrating means to cause the sieve screen to vibrate or
flex; and a frame to which the sieve screen is connected, the
sieve screen including sieving means defining a plurality of
substantially parallel narrow slots and an array of backing
bars connected to the sieving means which render the sieve
screen self supporting, the sieve screen being connected to
the frame only at or adjacent its two end edges and at least
one of the connections being through a resilient bush or like
means allowing limited vibrational movement between the sieve
screen and the frames, means being provided  to prevent
material which is passing across the sieve screen between the
two end edges from flowing over an edge of the sieve screen
intermediate the said end edges which means do not impede
substantially the ability of the sieve screen to vibrate and
flex under the influence of the rapping or vibrating means,
and said rapping or vibrating means inducing a vibratory
motion in the sieve screen at a point or points intermediate
its ends and the motion induced in the screen by said second
rapping or vibrating means being substantially greater in
amplitude and lower in frequency than the motion induced by
said first rapping or vibrating means.

7.    A sieve screen deck substantially as hereinbefore
described with reference to Figs. 1 and 2, or Figs. 3 and 4
or Figs. 5, 6, 7 and 8 of the accompanying drawings.

8.    A sieve screen deck comprising a sieve screen, supporting means and vibrating means characterised in that the
vibrating means are arranged to induce at least two modes of
vibration in the sieve screen one of which is substantially
greater in amplitude and/or lower in frequency than another.

0125794

FIG.1

FIG. 2

FIG.3

FIG.4
(A-A)

FIG.5

FIG.6
(B-B)

FIG.7

FIG.8

302

307

302

A

0125794